# FASCICULE DE BREVET EUROPEEN

(11) **EP 4 073 922 B1**
(45) Date de publication et mention de la délivrance du brevet: **05.03.2025**
(21) Numéro de dépôt: 20828535.3
(22) Date de dépôt: 01.12.2020
(51) Int. Cl.: H02P 5/49, H02P 6/04, F02C 9/18, F02C 9/20

(54) **ARCHITECTURE MUTUALISEE POUR LE PILOTAGE D'ACTIONNEURS ELECTROMECANIQUES**
GEGENSEITIGE ARCHITEKTUR ZUR ANSTEUERUNG ELEKTROMECHANISCHER AKTUATOREN
MUTUALISED ARCHITECTURE FOR THE CONTROL OF ELECTROMECHANICAL ACTUATORS

(30) Priorité: 09.12.2019 FR 1913944
(43) Date de publication de la demande: 19.10.2022
(73) Titulaire: SAFRAN AIRCRAFT ENGINES, 75015 Paris (FR)
(72) Inventeur: DE BLOIS, Nicolas, Bertrand, Georges, 77550 MOISSY-CRAMAYEL (FR); DUPAYS, Clément, 77550 MOISSY-CRAMAYEL (FR)
(74) Mandataire: Cabinet Beau de Loménie
(86) Numéro de dépôt international: PCT/FR2020/052233
(87) Numéro de publication internationale: WO 2021/116558

(56) Documents cités:
- EP-A2- 2 942 679
- DE-A1- 102011 082 965

## Description

### Domaine Technique

La présente invention se rapporte au domaine général de l'électrification des turbomachines aéronautiques.

### Technique antérieure

EP 2 942 679 A2 divulgue un système pour la commande et le fonctionnement d'une architecture de contrôleur de moteurs parallèle. DE 10 2011 082965 A1 divulgue une technique d'exploitation d'un réseau de communication dans un véhicule automobile pour former un système de contrôle du véhicule.

Dans ce cadre, des organes ou charges mobiles comme des géométries variables de la turbomachine, qui comprennent notamment les portes ou vannes de décharge variable VBV (pour Variable Bleed Valve) ou encore des pompes, peuvent être pilotées via une chaîne d'actionnement de type électromécanique en remplacement du système actuel de pilotage hydraulique comportant une synchronisation mécanique constituée comme il est connu d'un anneau et d'un ensemble de biellettes et de leviers (aussi appelés guignols). Le principe de cette chaîne d'actionnement consiste à utiliser un actionneur électromécanique pour chaque charge mobile ou pour un nombre réduit de charges mobiles. Ce type d'architecture est dit de type distribué.

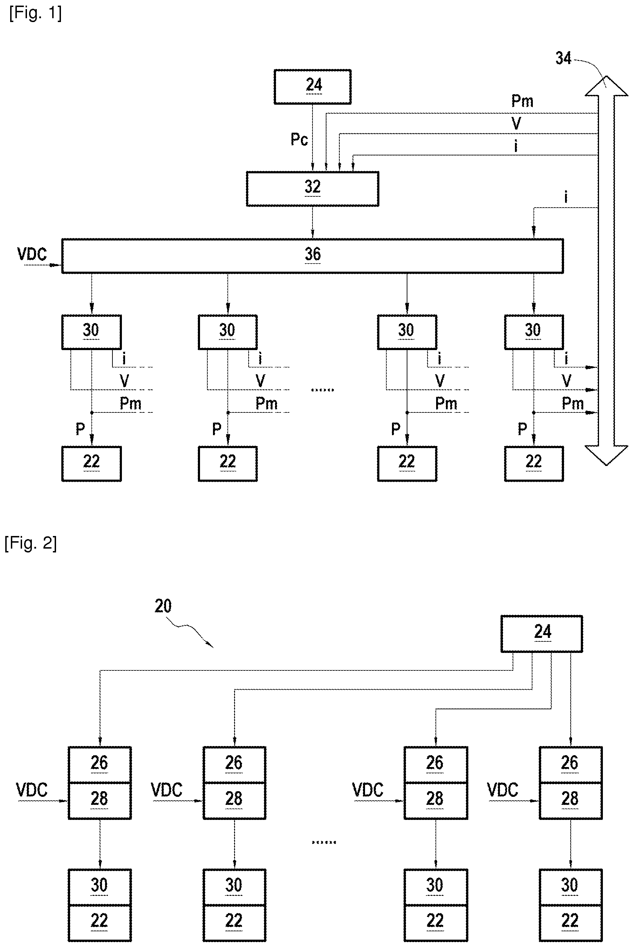

Cette architecture distribuée, illustrée à la figure 2, est composée d'une chaîne d'actionnement électromécanique 20 assurant la commande de la position, en boucle ouverte ou fermée selon le type de pilotage désiré, de charges mobiles 22 via les actionneurs électromécaniques 30 depuis une unité de commande de la turbomachine 24, par exemple un EEC (pour Electronic Engine Controller). Cette architecture est rendue possible par l'utilisation d'électronique de puissance (contrôleur 26 et convertisseur 28). Toutefois, cette chaîne d'actionnement électromécanique impose d'avoir en face de chaque actionneur 30 un convertisseur 26 et un contrôleur 28.

Toutefois, le pilotage de charges mobiles, comme par exemple les portes VBV, suppose de multiplier le nombre d'actionneurs impliqués, dans la mesure où un actionneur est alloué à chaque porte VBV ou à un nombre réduit de portes VBV, par exemple deux à quatre portes. Ceci entraîne donc la multiplication de l'électronique de puissance avec comme conséquence, au vu de la criticité des systèmes actionnés, un manque de fiabilité et de robustesse vis-à-vis de l'environnement conduisant à une redondance systématique des contrôleurs dans cette architecture distribuée.

Or, dans le domaine aéronautique, cette redondance systématique des contrôleurs rend l'intégration de l'électronique de puissance impossible du fait de l'augmentation considérable du bilan masse/volume.

### Exposé de l'invention

La présente invention a donc pour but principal de pallier un tel inconvénient en proposant une nouvelle architecture de commande de charges mobiles permettant d'optimiser le bilan masse/volume global de la chaîne d'actionnement électromécanique tout en garantissant une disponibilité de la turbomachine aéronautique acceptable.

Ce but est atteint par une chaîne d'actionnement électromécanique pour le pilotage du déplacement de charges mobiles d'un turbomachine aéronautique depuis une unité de commande, une ou plusieurs desdites charges mobiles étant actionnées par un actionneur électromécanique, caractérisée en ce que, pour commander ledit déplacement, elle comporte en outre un unique contrôleur Ethernet à commande déterministe assurant via un bus Ethernet le contrôle d'un ensemble de convertisseurs agissant sélectivement sur lesdits actionneurs électromécaniques, la vitesse de transfert des informations que permet le protocole Ethernet étant suffisamment rapide pour être considérée comme instantanée par rapport au déplacement de la charge mobile.

Ainsi en réduisant de manière significative le nombre de contrôleurs de la chaîne d'actionnement électromécanique et par l'introduction d'un protocole de communication ultrarapide on évite la redondance des contrôleurs de l'état de l'art. De préférence, ledit actionneur électromécanique est un moteur synchrone à aimant permanent, un moteur asynchrone, un moteur pas à pas ou un moteur à réluctance variable, couplé ou non à une transmission mécanique linéaire ou rotative. Avantageusement, ledit convertisseur est un hacheur ou un onduleur.

De préférence, ledit contrôleur Ethernet est configuré pour gérer autant de boucles de courant, de vitesse et de position que d'actionneurs électromécaniques. Avantageusement, la vitesse de transfert des informations au niveau des boucles de courant et de vitesse, respectivement des boucles de courant et de position, est au moins cent fois supérieure à celle de la boucle de position, respectivement de la boucle de vitesse, pilotant le déplacement de la charge mobile.

De préférence, la vitesse de transfert des informations au niveau des boucles de courant correspond à un temps de transfert inférieur à 15 microsecondes, typiquement 10 microsecondes.

Avantageusement, la vitesse de transfert des informations au niveau de la boucle, de position ou de vitesse, pilotant le déplacement de la charge mobile correspond à un temps de transfert de l'ordre de 15 millisecondes.

Selon le mode de réalisation envisagée, lesdites charges mobiles peuvent être des vannes de décharge variable dont le déplacement est piloté par une boucle de position, des pompes dont le déplacement est piloté par une boucle de vitesse ou tout autre organe analogue dont le déplacement est piloté par une boucle de position ou de vitesse.

La présente invention concerne également une turbomachine aéronautique comportant une chaîne d'actionnement électromécanique pour la commande du déplacement de charges mobiles telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] figure 1 illustre un schéma de principe d'une nouvelle architecture d'électronique de puissance d'une chaine d'actionnement électromécanique de charges mobiles selon l'invention, et
[Fig. 2] la figure 2 montre un schéma de principe d'une architecture conventionnelle d'électronique de puissance d'une chaine d'actionnement électromécanique de charges mobiles.

### Description des modes de réalisation

L'invention consiste à proposer une architecture de contrôle mutualisée pour la régulation des actionneurs électromécaniques d'une turbomachine aéronautique.

Pour ce faire, la chaîne d'actionnement électromécanique 10 pour la commande du déplacement de charges mobiles aéronautiques 22 depuis une unité de commande 24, une ou plusieurs de ces charges mobiles 22 (par exemple des portes ou vannes de décharge variable (VBV) ou d'autres géométries variables telles que des pompes) étant actionnées par un actionneur électromécanique 30, comporte selon l'invention un unique contrôleur Ethernet 32 assurant via un bus Ethernet 34 le contrôle d'un ensemble de convertisseurs 36 (dont le nombre est au plus égal au nombre d'actionneurs) agissant sélectivement sur les actionneurs électromécaniques 30. Pour permettre le pilotage de la charge mobile 22, le contrôleur 30 délivre un retour de consigne (typiquement une position, en l'espèce Pm, ou une vitesse) à l'unité de commande 24 qui lui retourne alors une commande de position (Pc) ou de vitesse. Cette commande utilise un protocole de communication rapide de type déterministe pour permettre de gérer en parallèle les boucles de contrôle de chaque actionneur électromécanique 30. Par déterministe, on entend que, pour toute information, on prévoit la durée précise que prendra son émission par le contrôleur Ethernet.

Les boucles de contrôle sont typiquement des boucles de courant i, de vitesse V et de position P. Lorsque le déplacement de la charge mobile est commandé en position (cas des portes VBV illustré), la boucle principale est la boucle de position, les boucles de vitesse et de courant étant alors considérées comme des boucles secondaires. Par contre, lorsque le déplacement de la charge mobile est commandé en vitesse (cas de pompes par exemple), la boucle principale est la boucle de vitesse, les boucles de position et de courant étant alors considérées comme des boucles secondaires.

Le contrôleur Ethernet déterministe peut être un composant dédié (par exemple intégrant des boucles de vitesse et de courant pour une régulation de type modulation vectorielle) ou un microprocesseur pourvu d'un protocole de communication Ethernet.

La vitesse de transfert des informations au niveau de ces deux boucles de courant et de vitesse (en cas de consigne de position) ou de courant et de position (en cas de consigne de vitesse) que permet le protocole Ethernet est suffisamment rapide (temps de transfert <15 µs et typiquement <10 µs) pour être considérée comme instantanée au niveau de la boucle de commande (position ou vitesse) dont la vitesse de transfert est au moins cent fois supérieure et avantageusement environ mille fois supérieure (soit un temps de transfert de l'ordre de 15 ms).

Les convertisseurs 36 sont par exemple des hacheurs monophasés ou des onduleurs triphasés (voire hexaphasés pour les redondances au niveau des actionneurs) délivrant une tension alternative à partir d'une tension continue (typiquement issue d'un Bus DC 270V) et qui, lorsqu'ils sont en nombre identique à ceux des actionneurs, sont avantageusement intégrés mécaniquement au sein de ces actionneurs. Lorsque la charge mobile est une porte VBV, l'actionneur est intégré dans chaque porte VBV (dans la zone dite « Booster ») et il y a donc autant d'actionneurs que de portes VBV. Cet actionneur est préférentiellement un moteur synchrone à aimant permanent (toutefois un moteur à réluctance variable, un moteur pas à pas ou un moteur asynchrone est aussi envisageable) qui peut être couplé à une transmission mécanique, linéaire (de type vis à rouleau ou à bille par exemple) ou rotative, solidaire de la charge à entrainer.

## Revendications

1. Chaîne d'actionnement électromécanique pour le pilotage du déplacement de charges mobiles (22) d'une turbomachine aéronautique depuis une unité de commande (24), une ou plusieurs desdites charges mobiles étant actionnées par un actionneur électromécanique (30), **caractérisée en ce que**, pour commander ledit déplacement, elle comporte en outre un unique contrôleur Ethernet à commande déterministe (32) assurant via un bus Ethernet (34) le contrôle d'un ensemble de convertisseurs (36) agissant sélectivement sur lesdits actionneurs électromécaniques, la vitesse de transfert des informations que permet le protocole Ethernet étant suffisamment rapide pour être considérée comme instantanée par rapport au déplacement de la charge mobile.

2. Chaîne d'actionnement électromécanique selon la revendication 1, **caractérisée en ce que** ledit actionneur électromécanique est un moteur synchrone à aimant permanent, un moteur asynchrone, un moteur à réluctance variable ou un moteur pas à pas, couplé ou non à une transmission mécanique linéaire ou rotative.

3. Chaîne d'actionnement électromécanique selon la revendication 1 ou la revendication 2, **caractérisée en ce que** ledit convertisseur est un hacheur ou un onduleur.

4. Chaîne d'actionnement électromécanique selon l'une quelconque des revendications 1 à 3, **caractérisée en ce que** ledit contrôleur Ethernet déterministe est configuré pour gérer autant de boucles de courant, de vitesse et de position que d'actionneurs électromécaniques.

5. Chaîne d'actionnement électromécanique selon la revendication 4, **caractérisée en ce que** la vitesse de transfert des informations au niveau des boucles de courant et de vitesse, respectivement des boucles de courant et de position, est au moins cent fois supérieure à celle de la boucle de position, respectivement de la boucle de vitesse, pilotant le déplacement de la charge mobile.

6. Chaîne d'actionnement électromécanique selon la revendication 5, **caractérisée en ce que** la vitesse de transfert des informations au niveau des boucles de courant correspond à un temps de transfert inférieur à 15 microsecondes, typiquement 10 microsecondes.

7. Chaîne d'actionnement électromécanique selon la revendication 5, **caractérisée en ce que** la vitesse de transfert des informations au niveau de la boucle, de position ou de vitesse, pilotant le déplacement de la charge mobile correspond à un temps de transfert de l'ordre de 15 millisecondes.

8. Chaîne d'actionnement électromécanique selon l'une quelconque des revendications 1 à 7, **caractérisée en ce que** lesdites charges mobiles sont des vannes de décharge variables dont le déplacement est piloté par une boucle de position.

9. Chaîne d'actionnement électromécanique selon l'une quelconque des revendications 1 à 7, **caractérisée en ce que** lesdites charges mobiles sont des pompes dont le déplacement est piloté par une boucle de vitesse.

10. Turbomachine aéronautique comportant une chaîne d'actionnement électromécanique selon l'une quelconque des revendications 1 à 9.

## Patentansprüche

1. Elektromechanische Betätigungskette zur Regelung der Bewegung von beweglichen Lasten (22) einer Luftfahrt-Turbomaschine von einer Steuereinheit (24) aus, wobei eine oder mehrere der beweglichen Lasten durch ein elektromechanisches Stellglied (30) betätigt werden, **dadurch gekennzeichnet, dass** sie zum Steuern der Bewegung ferner einen einzelnen deterministisch gesteuerten Ethernet-Controller (32) beinhaltet, der über eine Ethernet-Busleitung (34) die Steuerung einer Anordnung von Wandlern (36) sicherstellt, die selektiv auf die elektromechanischen Stellglieder wirken, wobei die Informationsübertragungs-Geschwindigkeit, welche das Ethernet-Protokoll zulässt, ausreichend schnell ist, um in Bezug auf die Bewegung der beweglichen Last als unverzüglich zu gelten.

2. Elektromechanische Betätigungskette nach Anspruch 1, **dadurch gekennzeichnet, dass** das elektromechanische Stellglied ein Permanentmagnet-Synchronmotor, ein Asynchronmotor, ein Motor mit variabler Reluktanz oder ein Schrittmotor ist, der mit einem mechanischen Linear- oder Rotationsgetriebe gekoppelt ist oder nicht.

3. Elektromechanische Betätigungskette nach Anspruch 1 oder Anspruch 2, **dadurch gekennzeichnet, dass** der Wandler ein Zerhacker oder ein Wechselrichter ist.

4. Elektromechanische Betätigungskette nach einem der Ansprüche 1 bis 3, **dadurch gekennzeichnet, dass** der deterministische Ethernet-Controller dazu ausgestaltet ist, gleich viele Strom-, Geschwindigkeits- und Positionsschleifen zu verwalten wie elektromechanische Stellglieder vorhanden sind.

5. Elektromechanische Betätigungskette nach Anspruch 4, **dadurch gekennzeichnet, dass** die Informationsübertragungs-Geschwindigkeit auf der Ebene der Strom- und Geschwindigkeitsschleifen bzw. der Strom- und Positionsschleifen zumindest um das 100-Fache höher ist als jene der Positionsschleife bzw. der Geschwindigkeitsschleife, welche die Bewegung der beweglichen Last regelt.

6. Elektromechanische Betätigungskette nach Anspruch 5, **dadurch gekennzeichnet, dass** die Informationsübertragungs-Geschwindigkeit auf der Ebene der Stromschleifen einer Übertragungszeit von weniger als 15 Mikrosekunden, in der Regel 10 Mikrosekunden, entspricht.

7. Elektromechanische Betätigungskette nach Anspruch 5, **dadurch gekennzeichnet, dass** die Informationsübertragungs-Geschwindigkeit auf der Ebene der Positions- oder Geschwindigkeitsschleife, welche die Bewegung der beweglichen Last regelt, einer Übertragungszeit in der Größenordnung von 15 Millisekunden entspricht.

8. Elektromechanische Betätigungskette nach einem der Ansprüche 1 bis 7, **dadurch gekennzeichnet, dass** die beweglichen Lasten variable Entlastungsventile sind, deren Bewegung durch eine Positionsschleife geregelt wird.

9. Elektromechanische Betätigungskette nach einem der Ansprüche 1 bis 7, **dadurch gekennzeichnet, dass** die beweglichen Lasten Pumpen sind, deren Bewegung durch eine Geschwindigkeitsschleife geregelt wird.

10. Luftfahrt-Turbomaschine, die eine elektromechanische Betätigungskette nach einem der Ansprüche 1 bis 9 beinhaltet.

## Claims

1. An electromechanical actuation chain for controlling the movement of mobile loads (22) of an aircraft turbine engine, from a control unit (24), one or more of said mobile loads being actuated by an electromechanical actuator (30), **characterized in that**, to control said movement, it also comprises a single Ethernet controller (32) having deterministic control that uses an Ethernet bus (34) to control a set of converters (36) acting selectively on said electromechanical actuators, the speed of information transfer allowed by the Ethernet protocol is sufficiently fast to be considered instantaneous in relation to the movement of the mobile load

2. The electromechanical actuation chain according to claim 1, **characterized in that** said electromechanical actuator is a permanent magnet synchronous motor, an asynchronous motor, a variable reluctance motor or a stepped motor, whether or not coupled to linear or rotary mechanical transmission.

3. The electromechanical actuation chain according to claim 1 or claim 2, **characterized in that** said converter is a chopper or inverter.

4. The electromechanical actuation chain according to any of claims 1 to 3, **characterized in that** said deterministic Ethernet controller is configured to manage as many current, speed and position loops as there are electromechanical actuators.

5. The electromechanical actuation chain according to claim 4, **characterized in that** the speed of transfer of information at the current and speed loops, current and position loops respectively, is at least one hundred times faster than that of the position loop, speed loop respectively, driving movement of the mobile load.

6. The electromechanical actuation chain according to claim 5, **characterized in that** the speed of transfer of information at the current loops corresponds to a transfer time of less than 15 microseconds, typically 10 microseconds.

7. The electromechanical actuation chain according to claim 5, **characterized in that** the speed of transfer of information at the position or speed loop driving movement of the mobile load corresponds to a transfer time in the region of 15 milliseconds.

8. The electromechanical actuation chain according to any of claims 1 to 7 **characterized in that** said mobile loads are variable bleed valves the movement of which is driven by a position loop.

9. The electromechanical actuation chain according to any of claims 1 to 7, **characterized in that** said mobile loads are pumps the movement of which is driven by a speed loop.

10. An aircraft turbine engine comprising an electromechanical actuation chain according to any of claims 1 to 9.
